# EUROPÄISCHE PATENTSCHRIFT

(11) **EP 1 069 673 B1**
(45) Veröffentlichungstag und Bekanntmachung des Hinweises auf die Patenterteilung: **07.12.2005**
(21) Anmeldenummer: 99810645.4
(22) Anmeldetag: 16.07.1999
(51) Int. Cl.: H02M 1/12, H02H 9/00

(54) **Netzfilter**
Line filter
Filtre réseau

(43) Veröffentlichungstag der Anmeldung: 17.01.2001
(73) Patentinhaber: SCHAFFNER EMV AG, 4542 Luterbach (CH)
(72) Erfinder: Kull, Peter, 4513 Langendorf (CH)
(74) Vertreter: P&TS Patents & Technology Surveys SA

(56) Entgegenhaltungen:
- US-A- 4 677 401
- US-A- 4 760 485
- US-A- 5 686 806
- TREZEGUET H: "LES FILTRES SECTEUR DE PROTECTION" ELECTRONIQUE,FR,CEP COMMUNICATION, PARIS, Nr. 72, 31. Juli 1997 (1997-07-31), Seite 62-64 XP000729049 ISSN: 1157-1152 & DATABASE HTTP:/WWW.SCHAFFNER.COM [Online] schaffner SCHAFFNER: "Three-phse filters for chassis-mounting"

## Beschreibung

Die vorliegende Erfindung betrifft einen Netzfilter, insbesondere einen Eingangsfilter, um die Aussendung asymmetrischer Störspannungen und steilen Spannungsimpulse am Eingang von Geräten zu dämpfen.

Umrichter werden vorwiegend angewendet, um die Spannung und die Frequenz zu steuern, die an eine Last, beispielsweise an einen Motor, angelegt ist. Solche Umrichter erzeugen hohe Störspannungen, die mit einem Netzfilter bedämpft werden müssen.

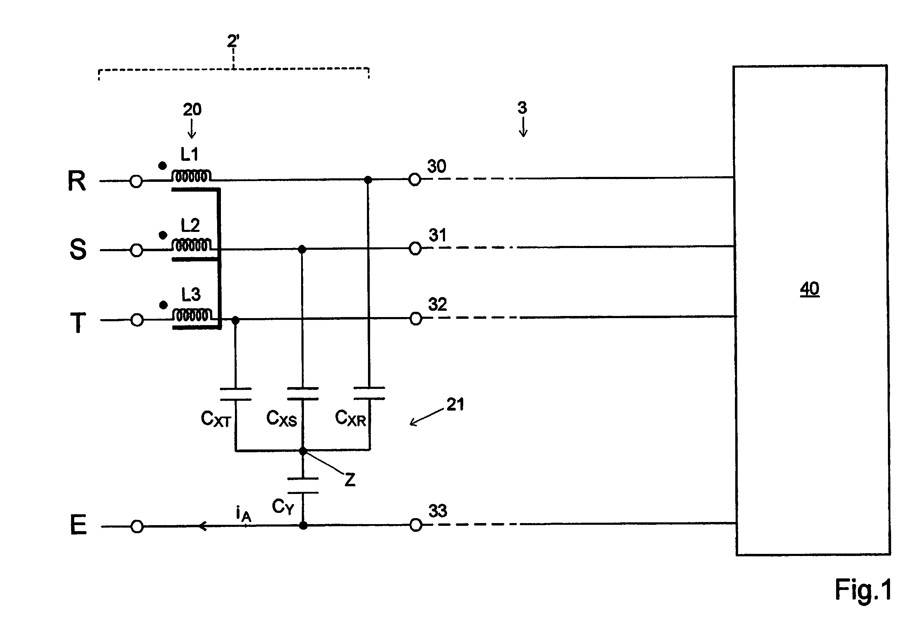

Eine mögliche Schaltung, um die asymmetrischen Störspannungen zu dämpfen, wird auf der Figur 1 dargestellt. Die Figur 1 zeigt ein leicht vereinfachtes Schaltbild einer Filtereinrichtung 2', welche eine stromkompensierte Drossel 20 (L₁, L₂, L₃) und ein Kapazitätsnetzwerk 21 aufweist und die mit den lastseitigen Klemmen 30, 31, 32 mit einer Last 40, beispielsweise eines Umrichters 40, geschaltet ist. Das Kapazitätsnetzwerk weist drei sterngeschaltete Kondensatoren C_{XT}, C_{XS}, C_{XR} auf, um symmetrische Störungen zu dämpfen. Ein zusätzlicher Kondensator C_{Y} zwischen Sternpunkt Z und Erde leitet die asymmetrischen Ströme zum Erdpotential.

Wenn alle drei sterngeschalteten Kondensatoren identisch sind, fliesst im Normalbetrieb, das heisst wenn die Phasenspannungen R, S, T gleich sind und in 120° zueinander stehen, kein Ableitstrom i_{A} durch den Kondensator C_{Y}.

Sind aber die Spannungen in den drei Leitern R, S, T nicht gleich oder nicht um 120° phasenverschoben, oder sind Störspannungen oder Oberwellenspannungen vorhanden, so kann bei einem grossen C_{y} Kondensator der Ableitstrom i_{A} unzulässig gross werden. Sind Schutzeinrichtungen wie Fehlstromschutzschalter vorhanden, können letztere durch diesen Ableitstrom i_{A} ausgelöst werden. Vor allem beim Einschalten, wenn momentan nur eine oder zwei der drei Phasen eingeschaltet sind, können solche Probleme oft auftreten.

Ausserdem kann der Ableitstrom die stromkompensierten Drosseln L₁, L₂, L₃ sättigen und zur Verwendung von niederpermeablem Kernmaterial zwingen.

Um dieses Problem zu lösen, könnte man höhere Induktivitätswerte für die Drosseln L₁, L₂, L₃ verwenden, was natürlich den Preis und den Raumbedarf vergrössern würde. Eine andere Möglichkeit wäre, teure mehrstufige Filter einzusetzen oder Verzögerungseinrichtungen für das Zuschalten des C_{y} Kondensators beim Einschaltvorgang zu benutzen; beides hilft jedoch nicht gegen Asymmetrien und Oberwellen.

Bei Geräten und Netzfiltern mit drei Phasen und Nulleiter tritt dieses Problem nicht auf. Die Drossel 20 muss dafür allerdings vier Wicklungen mit einem Drahtquerschnitt mindestens für den Nennstrom aufweisen. Ein Netzfilter für Geräte mit drei Phasen und Nulleiter wird zum Beispiel im Patent US4677401 beschrieben. In diesem Beispiel ist ausserdem die Schnittfläche des Nulleiters mindestens so gross wie die Summe der Schnittfläche der drei Phasenleiter, um eine Erhitzung des Nulleiters zu vermeiden, wenn ein maximaler Rückstrom fliesst. Ein ähnlicher Filter für ein einphasiges Gerät wird im Patent US4760485 beschrieben.

Die meisten Geräte 40 benötigen keinen Nulleitereingang. Die Drossel 20 wird deshalb oft mit nur drei Wicklungen L₁, L₂, L₃ ausgeführt.

Die vorliegende Erfindung hat daher zum Ziel, einen neuen Netzfilter, insbesondere für Geräte ohne Nulleitereingang, vorzuschlagen, mit welcher die oben genannten Nachteile vermieden oder zumindest reduziert werden können.

Erreicht wird dies mit einem Filter, welcher die Merkmale des unabhängigen Anspruches vorweist.

Insbesondere wird dieses Ziel mit einem Netzfilter für Geräte ohne Nulleitereingang erreicht, welcher eine stromkompensierte Drossel und ein Kapazitätsnetzwerk aufweist, wobei die benannte stromkompensierte Drossel drei Phasenwicklungen auf einem gemeinsamen Kern aufweist und jede Wicklung in Reihe mit einem der drei benannten Leiter geschaltet ist. Das benannte Kapazitätsnetzwerk weist drei sterngeschaltete Kondensatoren und einen Kondensator zwischen Sternpunkt Z und Erde auf. Gemäss der Erfindung wird der benannte Sternpunkt Z über eine zusätzliche Nulleiterwicklung, mit reduziertem Querschnitt, auf dem benannten Kern mit dem Nulleiter auf der Netzseite verbunden.

Durch diese Anordnung wird die am Sternpunkt entstehende Spannung kurzgeschlossen, so dass auch bei Asymmetrien und Oberwellen keine hohe Spannung am Cy-Kondensator liegt.

Im folgenden werden anhand der beigefügten Zeichnung bevorzugte Ausführungsbeispiele der Erfindung näher beschrieben. Es zeigen:
- Die schon diskutierte Figur 1 das Schaltbild eines bekannten Filters.
- Die Figur 2 das Schaltbild eines bevorzugten Ausführungsbeispiels des erfindungsgemässen Filters.
- Die Figur 3 das Schaltbild eines anderen Ausführungsbeispiels des erfindungsgemässen Filters.

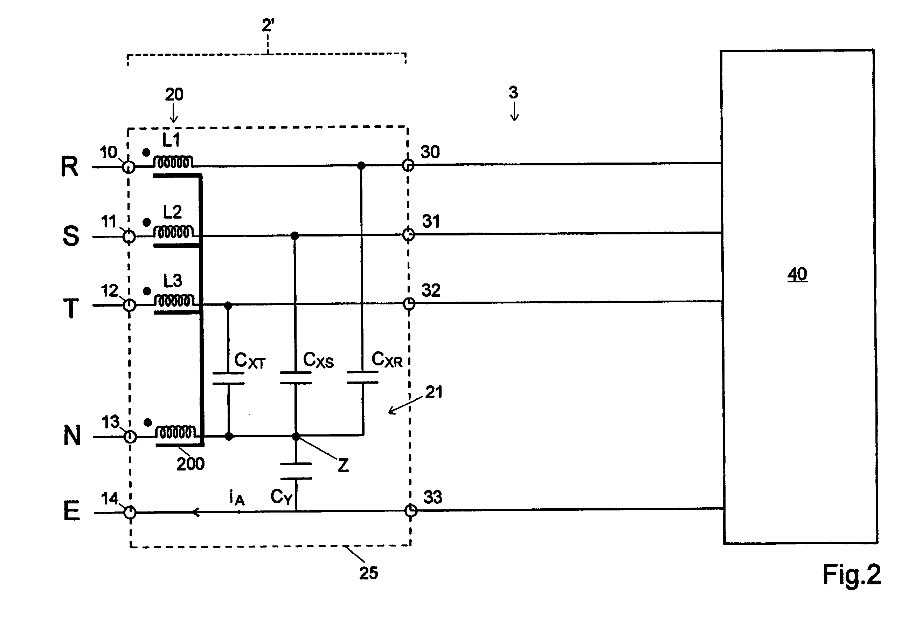

Die Figur 2 zeigt einen Netzfilter 2 gemäss einer ersten bevorzugten Ausführungsvariante der Erfindung. Der Netzfilter 2 verfügt über fünf Eingangsklemmen 10 bis 14 für den Anschluss mit dem Versorgungsnetz, welches drei Phasenleiter R,S,T, eine neutrale Leitung N und eine Erdleitung E aufweist. Der Filter 2 verfügt ausserdem über vier Ausgangsklemmen 30, 31, 32, 33 für eine Last 40, beispielsweise für einen Umrichter für eine Drehfeldmaschine, ein UPS, ein Gleichspannungsspeisegerät oder ein Netz- oder Akkuladegerät. Die Last 40 wird an die Erdklemme 33 des Netzfilters 2 angeschlossen. Der Nulleiter N wird dagegen nicht zwischen Netzfilter 2 und Last 40 gezogen.

Der erfindungsgemässe Filter 2 kann vorzugsweise direkt oder eventuell über ein Kabel an die Eingangsklemmen der Last 40 angeschlossen sein. In einer Variante ist der Filter bereits in der Last 40 enthalten, beispielsweise im Gehäuse eines Umrichters integriert.

Der Filter 2 enthält eine stromkompensierte Drossel mit drei Phasenwicklungen L₁, L₂, L₃ auf einem gemeinsamen, symbolisch dargestellten Kern 200 sowie ein Kapazitätsnetzwerk 21 mit drei sterngeschalteten Kondensatoren C_{XT}, C_{XS}, C_{XR} und einem zusätzlichen Kondensator C_{y} zwischen Sternpunkt Z und Erde.

Zusätzliche Komponenten können im Filter vorgesehen werden, um die Dämpfungskurve zu beeinflussen. Beispielsweise können lineare Längsdrosseln in Reihe mit jeder Phasenwicklung L₁, L₂, L₃ geschaltet werden, damit auch symmetrische Störungen stärker gedämpft werden können. Der Filter 2 kann auch als verlustbehafteter Tiefpass vorhanden sein und entsprechend einen parallel zu jeder Phasenwicklung L₁, L₂, L₃ und/oder in Reihe zu jedem sterngeschalteten Kondensator C_{XT}, C_{XS}, C_{XR} und/oder C_{y} geschalteten Widerstand aufweisen.

Das Filter 2 enthält eine Nulleiterklemme 13, die dazu vorgesehen ist, mit dem Nulleiter N des Versorgungsnetzes 1 elektrisch verbunden zu sein. Eine zusätzliche Spule L₄ verbindet diese Klemme mit dem Sternpunkt Z des Kapazitätsnetzwerkes 21, so dass Spannungen, die wegen asymmetrischer Spannungen am Sternpunkt Z vorhanden sein können, kurzgeschlossen werden. Damit wird der über den Kondensator Cy fliessende Strom wesentlich reduziert, so dass das Risiko, dass Schutzschalter unnötigerweise ausgelöst werden, verkleinert wird.

Die Windungszahl der Spule L₄ wird vorzugsweise identisch zu L₁, L₂ und L₃ gewählt. Auf diese Weise wird die Dämpfwirkung des Filters 2 kaum beeinträchtigt.

Die Spule L₄ besteht vorzugsweise aus einer zusätzlichen Nulleiterwicklung auf dem Kern 200 der Drossel 20. Diese Wicklung wird vorzugsweise mit einem voll isolierten dünnen Draht (2 oder 3 Fachisolationen gemäss IEC 950) realisiert, der über die drei Phasenwicklungen L₁, L₂ und L₃ so verteilt ist, dass die Spule L₄ stromkompensiert ist. Da aber der Strom durch die sterngeschalteten Kondensatoren C_{XT}, C_{XS}, C_{XR} begrenzt ist, ist nur ein kleinerer Querschnitt für die Wicklung L₄ erforderlich.

Der Fachmann wird verstehen, dass durch die erfindungsgemässe Vorrichtung der Kern der stromkompensierten Drossel 20 nicht durch Ableitströme i_{A} belastet wird, so dass die volle Induktivität zur Dämpfung von Common Mode Störströmen zur Verfügung steht. Ausserdem erlaubt diese Schaltung auch, den Ableitstrom in der Drossel 20 zu kompensieren, so dass höher permeable Materialien für den Kern 200 verwendet werden können.

Der erfindungsgemässe Filter wird vorzugsweise in einem Gehäuse 25 geliefert, an welchem netzseitig fünf Eingangsklemmen 10 bis 14 und lastseitig drei Ausgangsklemmen 30 bis 32 vorhanden sind. Drei Eingangsklemmen sind für die Phasen R,S und T, eine für die Nulleiter und eine für die Erde bestimmt. Drei Ausgangsklemmen sind für den Anschluss an die Last 40 bestimmt, eine vierte Ausgangsklemme 33 kann für die Erde vorhanden sein.

Der Anwender hat damit die Möglichkeit, die Nulleiterklemme 13 mit dem Nulleiter N des Versorgungsnetzes zu verbinden, oder sie offen zu lassen und damit auf die Vorteile der Erfindung zu verzichten. Ebenfalls kann er diese Klemme direkt mit der Erde E verbinden, was bei grösseren elektromagnetischen Verträglichkeitsproblemen asymmetrische Störungen zusätzlich stark reduzieren kann, aber in vielen Netzkonfigurationen aus Sicherheitsgründen eventuell nicht erlaubt ist.

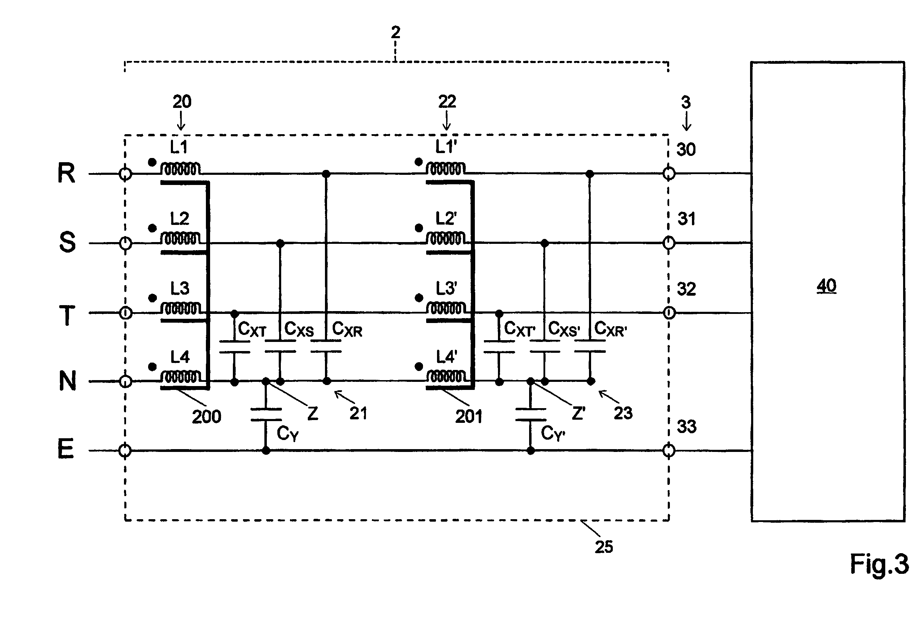

Die Figur 3 zeigt eine andere Ausgestaltung der Erfindung, in welcher ein zwei-stufiger Netzfilter 2 eingesetzt wird. Der Filter verfügt ebenfalls über fünf Eingangsklemmen 10 bis 14 für das Netz RST,N,E und über drei Ausgangsklemmen 30, 31, 32 für eine Last 40, eine vierte Ausgangsklemme 33 kann für die Erde vorhanden sein, so dass er genau wie der Filter der Figur 2 angewendet wird. Diese Filtervariante enthält jedoch zwei stromkompensierte Drosseln 20 bzw. 22 mit vier Wicklungen L₁, L₂, L₃, L₄ bzw. L₁', L₂', L₃', L₄' auf einem gemeinsamen, symbolisch dargestellten Kern 200 bzw. 201, sowie zwei Kapazitätsnetzwerke 21 bzw. 23 mit drei sterngeschalteten Kondensatoren C_{XT}, C_{XS}, C_{XR} bzw. C_{XT}', C_{XS}', C_{XR}' und einem zusätzlichen Kondensator C_{y} bzw. C_{y}' zwischen Sternpunkt Z bzw. Z' und Erde. Die Wicklungen L₄ bzw. L₄' sind wie oben beschrieben aufgebaut.

In dieser Ausgestalltung werden die am Sternpunkt Z entstehenden Spannungen über die Wicklung L₄ kurzgeschlossen, während die Überspannungen am zweiten Sternpunkt Z' über zwei Wicklungen L₄, L₄' mit dem Nulleiter verbunden sind. Diese Ausgestalltung erlaubt eine effizientere Dämpfung der Störspannungen und vermindert das Risiko der Auflösung von Fehlstromschutzschaltern beim Einschalten. Zudem können Kerne wesentlich höherer Permeabilität verwendet werden.

## Patentansprüche

1. Netzfilter (2) für Geräte (40) ohne Nulleitereingang, welcher eine stromkompensierte Drossel (20) und ein Kapazitätsnetzwerk (21) aufweist,
wobei die benannte stromkompensierte Drossel (20) drei Phasenwicklungen (L₁, L₂, L₃) auf einem gemeinsamen Kern (200) aufweist, wobei jede benannte Phasenwicklung in Reihe mit einem der drei Phasenleiter geschaltet ist,
wobei das benannte Kapazitätsnetzwerk (21) drei sterngeschaltete Kondensatoren (C_{XT}, C_{XS}, C_{XR}) und einen zusätzlichen Kondensator (C_{Y}) zwischen dem besagten Sternpunkt (Z) und Erde aufweist,
wobei der benannte Sternpunkt (Z) über eine zusätzliche Nulleiterwicklung (L₄) auf dem benannten Kern (200) netzseitig mit dem Nulleiter (N) verbunden ist
**dadurch gekennzeichnet, dass** das Netzfilter lastseitig nur Ausgangsklemmen für drei strömführenden Phasen und ggf. einen Erdleiter aufweist,
und dass die benannte Nulleiterwicklung (L₄) einen kleineren Querschnitt als die benannten Phasenwicklungen (L₁, L₂, L₃) aufweist.

2. Netzfilter gemäss Anspruch 1, **dadurch gekennzeichnet, dass** die benannte Nulleiterwicklung (L₄) aus einem über die benannten Phasenwicklungen (L₁, L₂, L₃) verteilten isolierten Draht besteht.

3. Netzfilter gemäss einem der vorhergehenden Ansprüche, **dadurch gekennzeichnet, dass** das Netzfilter netzseitig eine Nulleiterklemme aufweist.

4. Netzfilter gemäss einem der vorhergehenden Ansprüche, **dadurch gekennzeichnet, dass** das Netzfilter eine Vielzahl von Filterstufen enthält, wobei jede Filterstufe eine stromkompensierte Drossel (20, 22) und ein Kapazitätsnetzwerk (21, 23) aufweist.

5. Netzfilter gemäss einem der vorhergehenden Ansprüche, **dadurch gekennzeichnet, dass** eine lineare Längsdrossel in Reihe mit jeder benannten Phasenwicklung (L₁, L₂, L₃) geschaltet ist.

6. Netzfilter gemäss einem der vorhergehenden Ansprüche, **dadurch gekennzeichnet, dass** das Netzfilter als verlustbehafteter Tiefpass ausgebildet ist.

7. Netzfilter gemäss dem vorhergehenden Anspruch, **dadurch gekennzeichnet, dass** ein Widerstand parallel zu jeder benannten Phasenwicklung (L₁, L₂, L₃) geschaltet ist.

8. Netzfilter gemäss dem Anspruch 6, **dadurch gekennzeichnet, dass** ein Widerstand in Reihe mit jedem benannten sterngeschalteten Kondensator (C_{XT}, C_{XS}, C_{XR}) geschaltet ist.

9. Netzfilter gemäss einem der vorhergehenden Ansprüche, **dadurch gekennzeichnet, dass** das Netzfilter ein Gehäuse (25) sowie drei Eingangsklemmen für die drei Eingangsphasen, eine Nulleiterklemme, eine Erdklemme sowie drei Ausgangsklemmen für die drei Phasenleiter umfasst.

10. System mit einem Netzfilter (2) gemäss einem der Ansprüche 1 bis 9, einem dreiphasigen elektrischen Gerät (40) und einem elektrischen Kabel, wobei das besagte Netzfilter (2) über das Besagten Kabel mit den drei elektrischen Phasen (R, S, T) an die Eingangsklemmen des besagten Geräts angeschlossen ist, **dadurch gekennzeichnet, dass** nur drei stromführende Phasen und ggf. ein Erdleiter zwischen das besagte Filter (2) und das besagte Gerät (40) gezogen sind.

## Claims

1. Line filter (2) for devices (40) without neutral conductor input, having a current-compensated choke (20) and a capacitance network (21),
said current-compensated choke (20) having three phase windings (L₁, L₂, L₃) on a common core (200), each of said phase windings being connected in series with one of the three phase lines,
said capacitance network (21) having three capacitors (C_{XT}, C_{XS}, C_{XR}) connected star-wise and an additional capacitor (C_{Y}) between said star point (Z) and the earth,
said star point (Z) being connected on the network side with the neutral conductor (N) over an additional neutral conductor winding (L₄) on said core (200),
**characterized in that** the line filter has on the on-load side only output terminals for three current carrying phases and if appropriate an earth line,
and **in that** said neutral conductor winding (L₄) has a smaller cross-section than said phase windings (L₁, L₂, L₃).

2. Line filter according to claim 1, **characterized in that** said neutral conductor winding (L₄) consists of one isolated wire distributed over said phase windings (L₁, L₂, L₃).

3. Line filter according to the preceding claim, **characterized in that** the line filter has a neutral conductor terminal on the network side.

4. Line filter according to one of the preceding claims, **characterized in that** the line filter has a plurality of filter stages, each filter stage having a current-compensated choke (20, 22) and a capacitance network (21, 23).

5. Line filter according to one of the preceding claims, **characterized in that** a linear longitudinal choke is connected in series with each of said phase windings (L₁, L₂, L₃).

6. Line filter according to one of the preceding claims, **characterized in that** it is embodied as a lossy low-pass filter.

7. Line filter according to the preceding claim, **characterized in that** a resistance is connected in parallel to each of said phase windings (L₁, L₂, L₃).

8. Line filter according to claim 6, **characterized in that** a resistance is connected in series with each said star-connected capacitor (C_{XT}, C_{XS}, C_{XR}).

9. Line filter according to one of the preceding claims, **characterized in that** the line filter includes a housing (25) as well as three input terminals for the three input phases, one neutral conductor terminal, one earth terminal as well as three output terminals for the three phase lines.

10. System with a line filter (2) according to one of the claims 1 to 9, a three-phased electric device (40) and an electric cable, said line filter (2) being connected over said cable with the three electric phases (R, S, T) to the input terminals of said device, **characterized in that** only three current-carrying phases and if appropriate one earth line are drawn between said filter (2) and said device (40).

## Revendications

1. Filtre de ligne (2) pour appareils (40) sans entrée de neutre, qui comporte une bobine à compensation de courant (20) et un réseau de capacités (21),
ladite bobine à compensation de courant (20) comportant trois bobinages de phases (L₁, L₂, L₃) sur un noyau (200) commun, chacun desdits bobinages de phase étant connecté en série avec un des trois conducteurs de phase,
ledit réseau de capacités (21) comportant trois condensateurs (C_{XT}, C_{XS}, C_{XR}) connectés en étoile et un condensateur supplémentaire (C_{Y}) entre ledit point neutre (Z) et la terre,
ledit point neutre (Z) étant relié au neutre (N) du côté de l'alimentation à travers un bobinage de neutre (L₄) supplémentaire sur ledit noyau (200)
**caractérisé en ce que**, du côté de la charge, le filtre de ligne comporte seulement des bornes de connexion de sortie pour trois phases conductrices de courant et le cas échéant un conducteur de terre,
et **en ce que** ledit bobinage de neutre (L₄) comporte une section plus faible que lesdits bobinages de phase (L₁, L₂, L₃).

2. Filtre de ligne selon la revendication 1, **caractérisé en ce que** ledit bobinage de neutre (L₄) est constitué d'un fil isolé réparti au-dessus desdits bobinages de phase (L₁, L₂, L₃).

3. Filtre de ligne selon l'une des revendications précédentes, **caractérisé en ce que** le filtre de ligne comporte une borne de connexion pour le neutre du côté de l'alimentation.

4. Filtre de ligne selon l'une des revendications précédentes, **caractérisé en ce que** le filtre de ligne contient une pluralité d'étages de filtre, chaque étage de filtre comportant une bobine à compensation de courant (20, 22) et un réseau de capacités (21, 23).

5. Filtre de ligne selon l'une des revendications précédentes, **caractérisé en ce qu'**une bobine longitudinale linéaire est connectée en série avec chacun desdits bobinages de phase (L₁, L₂, L₃).

6. Filtre de ligne selon l'une des revendications précédentes, **caractérisé en ce que** le filtre de ligne est formé en tant que passe-bas à pertes.

7. Filtre de ligne selon la revendication précédente, **caractérisé en ce qu'**une résistance est connectée en parallèle de chacun desdits bobinages de phase (L₁, L₂, L₃).

8. Filtre de ligne selon la revendication 6, **caractérisé en ce qu'**une résistance est connectée en série avec chacun desdits condensateurs (C_{XT}, C_{XS}, C_{XR}) connectés en étoile.

9. Filtre de ligne selon l'une des revendications précédentes, **caractérisé en ce que** le filtre de ligne comprend un boîtier (25) ainsi que trois bornes de connexion d'entrée pour les trois phases d'entrée, une borne de connexion pour le neutre, une borne de connexion pour la terre ainsi que trois bornes de connexion de sortie pour les trois conducteurs de phase.

10. Système avec un filtre de ligne (2) selon l'une des revendications 1 à 9, un appareil électrique (40) triphasé et un câble électrique, ledit filtre de ligne (2) étant connecté à travers ledit câble avec les trois phases électriques (R, S, T) aux bornes de connexion d'entrée dudit appareil, **caractérisé en ce que** seules trois phase conductrices de courant et, le cas échéant, un conducteur de terre sont tirés entre ledit filtre (2) et ledit appareil (40).
